# EUROPEAN PATENT SPECIFICATION

(11) **EP 2 717 191 B1**
(45) Date of publication and mention of the grant of the patent: **22.05.2019**
(21) Application number: 13186755.8
(22) Date of filing: 30.09.2013
(51) Int. Cl.: G06F 21/64, G06F 21/60, H04L 9/32

(54) **Method for making a digital signature**
Verfahren zur Erzeugung von Digitalsignaturen
Procédé pour la création d'une signature numérique

(30) Priority: 02.10.2012 IT MI20121639
(43) Date of publication of application: 09.04.2014
(73) Proprietor: BIT4ID S.r.l., 80125 Napoli (IT)
(72) Inventor: Palazzo, Vincenzo, I-80055 Portici (Napoli) (IT)
(74) Representative: Botti, Mario

(56) References cited:
- US-A1- 2002 129 257
- US-A1- 2003 093 678
- US-A1- 2004 148 508
- US-A1- 2007 136 361
- US-A1- 2009 292 786
- US-A1- 2011 314 371

## Description

### Technical field

The present invention relates to a method for making a digital signature. In particular, the present invention relates to above said method wherein a signer of a digital formatted document applies an own cryptographic key in a method for digital signature, whose correct execution is determined by at least another parameter, such as for example a cryptographic algorithm selected for the signature method.

In particular, the present invention refers to defining a scheme to facilitate a digital signature process of a document.

### Known art

As is known, in order to make a digital signature on an electronic document, it is envisaged to insert a cryptographic key of a signer of a signature application receiving the input electronic document to be signed.

In particular, in order to apply a digital signature on the electronic document, it is necessary to provide the signature application with a digital certificate which is associated to the signer and to apply the cryptographic key (private key) by means of a secure device, such as a smartcard.

A digital certificate is an electronic document attesting the unique association between a public key and the identity of a subject (person, company, computer, etc.) declaring its use within the realm of asymmetric encryption procedures and/or authentication by means of a digital signature. Such a certificate is provided by a third party, which is trusted and recognized as a certification authority (CA), which in turn is authenticated in order to avoid forging through digital signature or is encrypted by the private key of the association, which then provides the respective associated public key for verification purposes.

A digital signature is for example a necessary step for providing a service to an internet address, at which the document to be signed is also provided. The service and the document to be signed are for example stored on a networked server, such as over the internet, which can be accessed by an electronic device belonging to the signer, for example a handheld device, a personal computer and similar, which are also connected to the network and are provided with a browser, for accessing Internet addresses.

In other words, the provision of a digital signature is required in order to access a service provided through the Internet and for which a signed electronic document has to be submitted. In such a scenario, the service is provided by a web server, on which the document to be signed is stored.

In known methods, for a proper application of a digital signature, it is not sufficient that the signer apply his cryptographic key but it is necessary that he correctly executes some operations such as downloading the document to be signed and associated to the required service, selecting an algorithm to sign, to which applying the signature key, and inserting one or more information which are generally required to the signer and that may for example include typing a check code of the signer or sending an acknowledgment for the treatment of data, without which the signature process cannot be accepted or correctly completed.

Substantially, to correctly apply the digital signature it is necessary for the user to have further ancillary information, which qualify the operation, for instance it may be necessary to know the certificate type to be used (for example an authentication certificate, a subscription certificate) or the signature algorithm to be used. In order to use the web service the user is also often required to know the file format to be used for signing (e.g. a signed pdf) and the way of sending it to the provider (e.g. mail delivery through http POST).

Such operations, which have to be performed by the signer, cause the digital signature method to become error prone, hindering its adequate diffusion.

Take for example the following case.

A user opens the browser on his electronic device, for example a personal computer or laptop, and accesses a service through an internet address, in order to download a document to be compiled and signed, saving it for example in a directory on the device, in a doc, pdf, docx or txt file format. The user may receive the document to be compiled and signed by email, and then saves it, as said above.

However, in both instances, the user may modify the extension of the file to be signed, for instance from .doc to .pdf, therefore not allowing the digital signature method to proceed correctly.

Moreover, if the digital device is a mobile device, for example one with an iOS or Android operating system, it has to be provided with an application that receives the document to be signed from the browser, since in such systems there is no provision for a preliminary saving into document folders. In this case, the user has to ascertain whether or not its electronic device is provided with an app which can read the document to be signed, and, if necessary, identify and install this application on the device.

In any case, for signing the document, the user not only has to use the required signature application, but has also to select one or more parameters to be input to the signature application, in addition to her cryptographic key. It is obvious that errors may occur during these procedures.

For example, supposing that the document to be signed is a pdf file, the signature application may be set in a "default" format of signature application, for example the CAdES format (CMS Advanced Electronic Signatures), which generates a signed file having an .p7m extension. However, it may be required, for a correct execution of the service required, to apply a different algorithm for the signature format, such as the PAdES format (PDF Advanced Electronic Signatures); therefore, if the user does not modify the "default" setup for the signature application, the digital signature is incorrect, though providing a valid cryptographic key.

Obviously, among different error scenarios, there is one where the user/signer applies a proper key, although not the one which is actually requested, for example she may erroneously input an authentication key instead of a subscription key.

Therefore errors may multiply: the user acquires the file to be signed from the requesting entity, downloading it through her own internet browser or by receiving it as an attachment to a mail message which is automatically sent. The file has a classic extension like .pdf, .doc, .docx, .txt, with an associated software installed on the host system, allowing its processing.

Through recognition of file extension, the MIME type, the host system of the user will start execution of required application in order to display its content. On desktop systems, the browser allows saving files through web applications in the file system, inside a directory chosen by the user (for example, Desktop, or Download). Once the file has been received, the user may interact with it easily, for example by double clicking it she may launch the software application allowing it to be displayed or edited. Thereafter, the downloaded file may be sent to the digital signature application, by using the corresponding procedure, such as by dragging the file icon over the icon of the signature application. On mobile systems using popular platforms like iOS and Android, the file is directly sent from the browser to an installed software application which has been registered for that particular file extension/MIME type. The signature app has therefore to register as a further compatible app for the file type provided by the web application.

The user signs the document by using a signature client conforming to the valid regulations and further instructions regarding setup parameters to be used are usually sent to the user of the web application by a voice message.

Once the signature has been applied, the user transmits the signed document to the requesting body through a channel provided by the latter, for example by email or through uploading using a web application. Usually, the digitally signed document is a file having a .p7m or .pdf extension (digitally signed pdf files in their native format have the same extension as pdf files without digital signature). On mobile systems, the digitally signed file is always owned by the digital signature application, which has to have some sort of autonomous transmission mechanism which is compatible with that provided by the web application or which at least has to provide a transmission mode of signed files to another application, which may then proceed with its transmission.

The proposed scenario shows that, in order to apply a signature to a document, the user not only has to use the proper signature application, but also the correct parameters for executing the procedure, and it is clear that during these operations some errors may occur.

For example, let's suppose that the document to be signed is a pdf file. In this case, the signature application may be set up in a "default" mode for applying a certain signature format, such as CAdES (CMS Advanced Electronic Signatures), which generates a signed file having an .p7m extension. However, for a correct execution of the service, it may be required to apply a different signature format, such as the PAdES format (PDF Advanced Electronic Signatures); therefore if the user does not modify the "default" setup for the signature application, the digital signature is incorrect, though executing a formally correct signature process. Another likely error the user may encounter is the use of a certificate which is not valid for a signature operation, wherein the user/signer may for example us an authentication certificate instead of a subscription certificate.

Methods are also known for digitally signing a document, which guide the user through use of "active web objects" such as ActiveX controls or Java applets. ActiveX controls are for example a technology developed by Microsoft® for extending an application's functions, for example the browser, by adding new commands.

Similarly, applets are programs written in the Java language, which may be executed by a web browser. Applets are used for creating web pages provided with interactive functions, such as guiding the user through signature steps.

The use of "active web objects" also presents some problems regarding the technology used, such as the provision of same objects for different platforms, i.e. different operating systems. Various solutions which are currently used do not provide interoperability between:
- operating systems,
- browsers.
- technologies for protecting the asymmetric digital signature keys (for example the type of smartcard remote signature).

Another problem intrinsic with the adoption of "active web objects" is the fact that they are often used for cyber attacks. Finally, there is also the limitation due to the fact that they cannot be used in a mobile environment, since web browsers for mobile devices, which are based on iOS and Android, do not allow their use.

US 2003/093678 discloses a method to make a digital signature; the signature request is sent from a client device to a server, at which the client must be authenticated; the signature is executed at the server, after client authentication.

The technical object of the present invention is therefore to provide a method for automatic digital signature, which avoids errors in the signature, by simplifying the required process and by providing the same for all users and all electronic devices, therefore overcoming the limitations which are still affecting the methods of the known art.

### Summary of the invention

The present invention is solved based on the concept of incorporating all necessary information for correctly executing a digital signature within a formatted file, which is input to a signature application of a user or signer's electronic device, which is able to extract the information and further receive a cryptographic key from the signer, in order to execute the digital signature method.

In particular, the signature application is stored and executed in a user or signer's electronic device, for instance a Smartphone or handheld device or in a personal computer which also stores the cryptographic key for signing.

The document to be signed is for instance sent by a remote server, as well as the formatted file containing the information or parameters necessary for signature.

In a modified embodiment, the cryptographic key is not physically stored in the user electronic device but is nonetheless transmitted to the user's electronic device, for instance by means of a smartcard or SIM card such as to be connected to the electronic device, and which stores the cryptographic key. In other words, the cryptographic key and the signature or authentication are not remotely stored but are present in the user's electronic device. More in particular, the signature of the document to be signed is physically executed on the electronic device, but the signature's parameters are sent from a remote server to the electronic device and incorporated into the formatted file.

Advantageously, according to the solution, possible errors during the signature method are essentially eliminated, since the signer is only required to input her cryptographic key into the signature application, for example by selecting it with her electronic device, and since all the other required information for executing the method are incorporated in the formatted file. Advantageously, such a formatted file may also be comprised of the file to be signed.

The advantage of such a method is evident when a service, for example a service provided by a server at a determined internet address, is carried out only following a specific digital signature, i.e. a signature which requires specific parameters.

In fact, contrary to known methods, the service does not send the document to be signed to the signer, but instead provides it with the formatted file which incorporates both the information or parameters required for the digital signature, and the document to be signed. When the electronic device of signer receives the formatted file, it automatically executes the signature application, extracting the document to be signed and the information for its correct digital signature from the formatted file, for example a specific cryptographic algorithm to be used.

The signer is free from any control or action required by the signature method, and may advantageously concentrate on reading the document to be signed and the insertion or selection of its correct cryptographic key, for signature.

In other words, the inventive solution consists of: creating a data structure incorporating the document to be signed and all information required for a correct application of digital signature, according to specifics set by the signature request.

The signature application, upon receiving above said data structure input, autonomously and correctly executes the signature method. Error probability in these signature processes is equal zero, and the user is only required to allow the use of her cryptographic key by said signature application, which will possess all information required for executing the method.

The advantage provided by such a method is evident in all those situations where in order to obtain a service, it is required to apply a signature having specific properties on a file which is downloaded from a web server. According to present invention, the user does not download the file to be signed and signs it with usual methods, but instead downloads a file containing above said data structure, which also includes the document to be signed together with all information required for applying the signature and successively transmitting it to a requesting body.

When the electronic device of the signer receives the file containing the data structure included in the formatted file, it automatically executes the signature application, by extracting from it the document to be signed and the information for a correct digital signature, for example a specific cryptographic algorithm to be used.

The signer is free from any control or required action in the signature method and may concentrate on reading the document to be signed and the application of the proper cryptographic key, in order to complete the signature process.

The present applicants have advantageously envisaged that the formatted file may optionally have a predetermined format and that signature application is automatically executed when the formatted file is downloaded to the electronic device.

According to an aspect of the invention, the information included in the formatted file also comprise an action to be performed after the document has been signed, for example sending a mail message to a predetermined address associated to a digital signature server and/or the server providing the service requested by the signer.

The inventive method by the applicant is therefore not only advantageous in that it automates the correct digital signature of documents but in that it automates certain operations required by a service before or after the digital signature. In other words, such operations may be strictly correlated to the digital signature method, for example related to the cryptographic algorithm, or a step preceding o succeeding the signature method, as for example sending the result of the digital signature. Moreover, the method may be used to execute the digital signature of a user, or the authentication of a user.

According to this solution, above said technical problem is solved by a method for automating a digital signature, comprising the step of receiving on a signer's electronic device a digital signature request, characterized in that the digital signature request comprises the transmission of a formatted file to the electronic device, comprising parameters for a correct execution of the digital signature, said file being associated to a signature application in the electronic device, suitable to detect the parameters from the formatted file and to accomplish the digital signature by receiving as an input a signer's cryptographic key.

More in particular, the method for executing a digital signature or authentication comprises the step of transmitting a digital signature request from a remote server to an electronic device of a signer, and is characterized in that it includes in the transmission of the digital signature request a formatted file comprising the parameters for a correct execution of the digital signature, and in that it executes a digital signature application in the electronic device, for detecting parameters from the formatted file and executing the digital signature according to detected parameters and by means of a signer's cryptographic key, said key being stored in the electronic device or being input by the signer into the electronic device.

Still according to the inventive idea, the technical problem is solved by a formatted file for the automation of a digital signature, comprising one or more parameters for a correct execution of the digital signature, said parameters comprising at least one among a cryptographic algorithm to be used in the signature application, a name of a file to be cryptographed and an extension thereof, a file to be cryptographed, one or more alphanumeric information for the correct execution of the digital signature, an action to be executed after the digital signature for the transmission of an outcome of the digital signature, said action preferably comprising the sending of an email message to a predetermined address or an HTTP_POST action.

The problem is also solved by a digital signature application suitable for execution in an electronic device of the user or signer and for detecting parameters for signature from the formatted file received in the electronic device from a remote server and executing the digital signature by receiving as an input a cryptographic key stored in the electronic device or sent to the signer's device and the document to be signed. In particular, the application is such as to extract the document to be signed from the formatted file, which comprises the signature parameters.

The present invention defines, proposes and formalizes a methodology for encapsulating all information required by the signature application within a suitable data structure which in fact constitutes the "signature request" of a given document, i.e. a data structure which allows the definition of all operations to be executed in order to sign a document and which includes all information required for applying a signature and all operations to be performed after the signing.

The problem concerning the application of a correct signature is solved by the inventive concept, which implements the data structure comprising the document to be signed and one or more parameters for applying a correct digital signature. The parameters comprise at least one among a plurality of cryptographic factors such as, for example: a cryptographic algorithm to be used, the file format of the digital signature to be generated, the certifying authority referenced to, the type of certificate to be used, the specific actions to be performed after the document signing.

Further advantages and characteristics of present method, of the formatted file and the signature application according to the present invention will be evident from the following description, which is provided for illustrative and non limiting purposes only, with reference to attached figures.

### Brief description of figures

Figure 1 shows a flow diagram of the method for executing a digital signature according to the present invention,
Figure 2 shows an example of a portion of a formatted file comprising parameters for the execution of the digital signature according to the method of figure 1.

### Detailed description

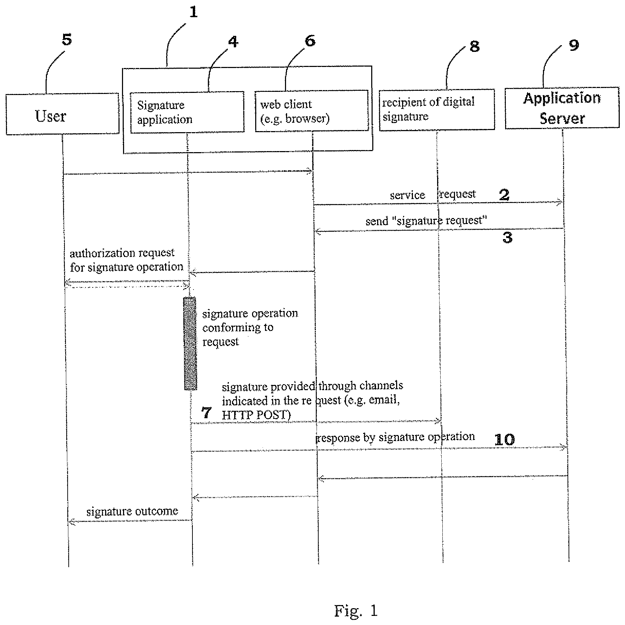

With reference to fig. 1, the steps of a method for executing a digital signature according to the present invention are schematically shown, and in particular for digitally signing a document by means of a signature application 4, which receives as an input the document to be signed and a cryptographic key from a signer 5. The application is stored and executed in an electronic device of the user or signer, which also stores or receives from the signer the cryptographic key required for executing the signature. On the other hand, the document to be signed is sent to the signature application by a remote server, which also sends the information necessary for a correct execution of the signature method.

A digital signature is for example required for receiving services provided by a remote server 9; the service is for example accessible through an internet address 2, at which the document to be signed can also be downloaded. The service and the document to be signed are stored on the server 9, which is connected to a network, such as the internet, and may be accessed from the electronic device 1 of signer 5, such as a handheld device, a personal computer or similar, which are also connected to the network. In particular, the electronic device 1 is provided with a navigator 6 or browser, for accessing the internet address 2.

In other words, the digital signature is for example requested for accessing a service provided by a web server 9, which may be accessed at an internet address 2. By accessing such address by means of her electronic device 1, the user may download the data structure for applying the signature of the invention, which is also called "signature request" in the following description. In particular, the signature request is a data structure included in a formatted file which includes both the document to be signed and the information for signing the document.

After having accessed the service through the internet address 2, the electronic device 1 of signer receives the digital signature request 3, which is required for using the service. The signature request is for example sent by the server 9 to the browser 6 of the electronic device 1. However, such a request 3 may also be sent through other means, such as by email, or by means of another server 8 which is connected to the network and is dedicated to the management of the signature process required for executing the service.

According to the present invention, the digital signature request 3 comprises the transmission of a formatted file to the electronic device 1, which includes one or more parameters for a correct execution of the digital signature, which in the following are also called information for a correct execution of signature. In particular, the formatted file is associated to signature application 4 in the electronic device 1, and signature application 4 is such as to detect the parameters in the formatted file and finishing the digital signature by receiving as an input from the signer only her cryptographic key.

In other words, still according to the invention, the digital signature request 3 is a data structure comprising the document to be signed and one or more parameters required for a correct execution of the digital signature. In particular, the file containing the data structure and which is formatted according a precise coding, is associated to the signature application 4 in the electronic device 1, and the signature application 4 is such as to retrieve from it the document to be signed and parameters required for applying the signature, by receiving, as an input, from the signer, only her cryptographic key.

Advantageously, according to the method of the present invention, the probability of errors during the signature process is essentially reduced to zero, because of the signer receiving the formatted file comprising all parameters to set for signing and also the correct file to be signed for performing the service, on her device, and the signature application automatically extracting the file to be signed and all parameters necessary for correctly executing the digital signature, completing the signature only when the signer inserts her cryptographic key. In other words, the only action required by the signer is the input of the cryptographic key into the signature application. If the signer erroneously inserts a wrong key, for example a subscription key instead of an authentication key, the signature application interrupts the process, signaling an error. Therefore this source of error is eliminated too. On the other hand, according to the known art, if the signer uses an incorrect certificate, for example a subscription certificate instead of an authentication certificate, the signature application interrupts the process, sometimes indicating an error which is not always easy to understand. The invention eliminates this source of error too.

According to an aspect of the present invention, the parameters comprise at least one of the following information:
- a cryptographic algorithm to be used by the signature application 4, such as DES, AES, etc.;
- the name of the file to be signed and its extension;
- the file to be signed, one or more alphanumeric information for correct execution of digital signature.

The alphanumeric information preferably comprise a time data, such as the date of signature execution, or an action 7 to be performed after the digital signature, for transmitting the outcome of the digital signature, such as a transmission to the server 9 which provides the service.

According to an aspect of the present invention, parameters comprise at least one of following information:
- the file to be signed,
- the signature mode (for example a collection of information characterizing the signature like the certifying body, type, etc.);
- the specific action to be performed on the specified file (for example: a simple signature, signature and mail message, signature and transmission by post action).

In practice, following the signature execution, the signature application 4 will hand back the signed document with further information, such as the process' outcome and a time stamp to the server 9.

In an embodiment of the invention, action 7 to be performed following the digital signature comprises the sending of an email message to a predefined address or an HTTP_POST action. In a modified embodiment, the information for applying the signature also comprise an action 7 to be performed prior to the digital signature method.

According to another aspect of the present invention, the formatted file representing the signature request has a predefined extension and the signature application 4 is automatically executed when the formatted file is received by the electronic device 1. By associating the extension of the formatted file to the signature application, the probability of errors is further reduced, since the signer does not even have the choice of the application to be used for signature. Advantageously, the signer 5 only inputs the cryptographic key for completing the digital signature into the signature application 4, whereas all other information are automatically extracted from the formatted file, by means of the signature application.

Obviously, the signature application may not be installed on the electronic device when the signer accesses the internet address providing the service, for example when accessing it for the first time. In such a case, according to an aspect of the present invention, the signature application is sent by the server 9, after the signer has accessed internet address 2. In such a case, the signature application is sent by the server 9 to the browser 6 of electronic device 1.

According to another aspect of the present invention, action 7 for transmitting the outcome of the digital signature is sent by signature application 4 to a digital signature management server 8 which is different from server 9 providing the service. In this case, preferably, the signature application 4 sends a signature confirmation 10 and the signed file also to the server 9 which provides the service, according to parameters specified in the formatted file.

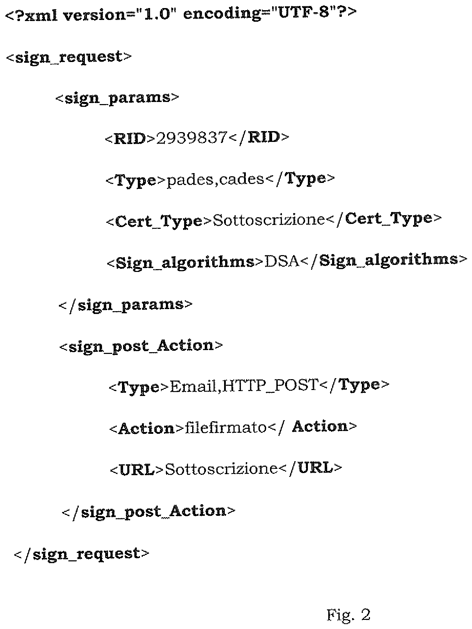

According to an embodiment, the formatted file is implemented by an archive file, for example a .zip or .JAR file. The archive file comprises in a DATA field a file to be signed and in a MANIFEST field, the parameters for a correct execution of the digital signature. The parameters are inserted into an XML file, for example, of the type shown in figure 2. Figure 2 shows that a tag <sign_request> is used for characterizing the file type XML, i.e. a digital signature request file, and a tag <sign_params> is used for pointing to the position where the parameters are to be retrieved from the XML file. In example shown in figure 2, parameters include an identification number for the signature request (tag <RID>), the format to be used in the signature method (tag <Type>), the type of key to be used for signature, for example a subscription key (tag <Cert_Type) and the action to be performed, for example after the signature (tag <sign_post_Action>). The above description of an XML file is included in a formatted file, provided for automation of a digital signature, according to the present invention, comprising one or more parameters for a correct execution of digital signature, which is automatically detected by the digital signature application, in order to accomplish the digital signature, wherein the signer only has to input her cryptographic key into the application.

In the following, main functional aspects of the present invention are briefly summarized:
The definition of a digital signature scheme using a "signature request" model for applying a digital signature. The scheme provides for an arbitrary electronic device of a signer receiving a digital signature request stored in a file with a specific format, whose extension is associated to a resident signature application. The file representing the "signature request" comprises the document to be signed, the parameters required for a correct execution of the digital signature and optional instructions referring to operations to be executed once the signature has been applied to the document.

Parameters comprise at least one among a plurality of cryptographic factors such as: the signature format to be used in the signature application, the document to be signed, a set of information for correct execution of digital signature such as for example the specific action required for applying the digital signature. The action following the signature, comprising the handing back of the signed file through email transmission to a predefined email address or an HTTP/POST action.

The file is built with a predefined extension and/or a specific MIME type, so that the signature application is automatically executed upon receiving the formatted file in the electronic device, wherein the signer has only to allow the use of her own cryptographic key by the signature application for completing the digital signature. According to one aspect of the invention, the action of transmitting the outcome of the digital signature is performed by sending the same from the signature application to a digital signature management server. The signature application further sends a signature confirmation and the signed file to the server providing the service.

The formatted file representing the "signature request" is a compressed archive file containing the signed document and information required for executing the signature.

The archive file comprises a file to be signed in a DATA field, and an XML file in a MANIFEST field, which includes said parameters for correct execution of digital signature.

Advantageously, according to the present invention, the probability of errors occurring during the signature method is essentially reduced to zero, since the signer is only required to input her own cryptographic key into the signature application, whereas all other information and parameters required for executing the method are included in the formatted file. The advantage is still more apparent when a service is provided only subsequent a specific digital signature, i.e. a signature requiring specific parameters for signature execution, since such parameters may be included in the formatted file together with the document to be signed, and the formatted file being sent to the user's device.

## Claims

1. A method for making a digital signature comprising the step of transmitting a digital signature request (3) from a remote server (9) to a signer's electronic device (1), wherein a signature application (4) and a browser (6) are configured to be executed in the electronic device (1),
wherein a formatted file comprising a document to be signed and parameters for a correct execution of the digital signature is included into the digital signature request (3),
wherein the formatted file has a predefined extension associated with the signature application, and the method comprising:
accessing an internet address (2) of the remote server (9) through the browser (6) by the signer;
receiving the digital signature request from the remote server (9) by the browser (6);
automatically executing the signature application (4) upon receiving the formatted file in the electronic device (1) by detecting the predefined extension of the formatted file, such as to detect the parameters from the formatted file and to execute the digital signature according to detected parameters and by using a signer's cryptographic key to generate the digital signature, said key being stored in the electronic device (1) or input by the signer into the electronic device (1); and
performing an action based on the parameters, said action including sending an email message to a predetermined address defined in the parameters or an HTTP_POST action.

2. A method according to claim 1, **characterized in that** said parameters comprise at least one among a cryptographic algorithm to be used in the signature application (4), a name of a file to be signed and the extension thereof, a document to be signed, one or more alphanumeric information for the correct execution of the digital signature, said information preferably comprising time data or an action (7) to be executed after the digital signature for the transmission of an outcome of the digital signature.

3. A method according to claims 1, **characterized in that** the outcome of the digital signature is sent from the signature application (4) to a digital signature management server (8) which is located at a predetermined address and is different from the server (9) which provides a service by means of the Internet address (2).

4. A method according to claim 3, **characterized in that** said signature application (4) further transmits to the server (9) a signature confirmation (10) and a signed file.

5. A method according to any of the previous claims, **characterized in that** said formatted file comprises an archive file, preferably a .zip file or a .JAR file.

6. A method according to claim 5, **characterized in that** said archive file comprises, in a DATA field, a file to be signed, and, in a MANIFEST field, a XML file which includes said parameters for a correct execution of the digital signature.

## Patentansprüche

1. Verfahren zur Vornahme einer digitalen Signatur, umfassend den Schritt der Übertragung einer digitalen Signaturanfrage (3) von einem entfernt liegenden Server (9) an eine elektronische Vorrichtung (1) eines Unterzeichners, wobei eine Signaturanwendung (4) und ein Browser (6) konfiguriert sind, um in der elektronischen Vorrichtung (1) ausgeführt zu werden,
wobei eine formatierte Datei, die ein Dokument, das zu signieren ist, und Parameter für eine korrekte Ausführung der digitalen Signatur umfasst, in die digitale Signaturanfrage (3) aufgenommen werden,
wobei die formatierte Datei eine vorgegebene Erweiterung aufweist, die mit der Signaturanwendung assoziiert ist, und das Verfahren umfasst:
Zugreifen auf eine Internetadresse (2) des entfernt liegenden Servers (9) durch den Unterzeichner durch den Browser (6);
Empfangen der digitalen Signaturanfrage von dem entfernt liegenden Server (9) durch den Browser (6);
automatisches Ausführen der Signaturanwendung (4) nach dem Empfangen der formatierten Datei in der elektronischen Vorrichtung (1) durch Erkennen der vorgegebenen Erweiterung der formatierten Datei, wie etwa um die Parameter aus der formatierten Datei zu erkennen und um die digitale Signatur nach erkannten Parametern auszuführen und durch Verwenden eines kryptografischen Schlüssels eines Unterzeichners, um die digitale Signatur zu erzeugen, wobei der Schlüssel in der elektronischen Vorrichtung (1) gespeichert oder durch den Unterzeichner in die elektronische Vorrichtung (1) eingegeben wird; und
Durchführen einer Aktion basierend auf den Parametern, wobei die Aktion das Senden einer E-Mail-Nachricht an eine vorgegebene Adresse, die in den Parametern definiert ist, oder eine HTTP_POST-Aktion enthält.

2. Verfahren nach Anspruch 1, **dadurch gekennzeichnet, dass** die Parameter mindestens eines aus einem kryptografischen Algorithmus, der in der Signaturanwendung (4) zu verwenden ist, einen Namen einer Datei, die zu signieren ist, und die Erweiterung davon, ein Dokument, das zu signieren ist, eine oder mehrere alphanumerische Informationen für die korrekte Ausführung der digitalen Signatur, wobei diese Informationen vorzugsweise Zeitdaten oder eine Aktion (7) umfassen, die nach der digitalen Signatur für die Übertragung eines Ergebnisses der digitalen Signatur ausgeführt werden sollen, umfassen.

3. Verfahren nach Ansprüchen 1, **dadurch gekennzeichnet, dass** das Ergebnis der digitalen Signatur von der Signaturanwendung (4) an einen digitalen Signaturmanagementserver (8) gesendet wird, der sich an einer vorgegebenen Adresse befindet und sich von dem Server (9) unterscheidet, der einen Dienst mittels der Internetadresse (2) bereitstellt.

4. Verfahren nach Anspruch 3, **dadurch gekennzeichnet, dass** die Signaturanwendung (4) ferner eine Signaturbestätigung (10) und eine signierte Datei an den Server (9) übermittelt.

5. Verfahren nach einem der vorherigen Ansprüche, **dadurch gekennzeichnet, dass** die formatierte Datei eine Archivdatei umfasst, vorzugsweise eine .zip-Datei oder eine .JAR-Datei.

6. Verfahren nach Anspruch 5, **dadurch gekennzeichnet, dass** die Archivdatei in einem DATA-Feld eine Datei, die zu signieren ist, und in einem MANIFEST-Feld eine XML-Datei, die die Parameter für eine korrekte Ausführung der digitalen Signatur enthält, umfasst.

## Revendications

1. Procédé pour la création d'une signature numérique comprenant l'étape d'émission d'une demande de signature numérique (3) depuis un serveur à distance (9) à un dispositif électronique d'un signataire (1), dans lequel une application de signature (4) et un navigateur (6) sont configurés pour être exécutés dans le dispositif électronique (1),
dans lequel un fichier formaté comprenant un document à signer et des paramètres pour une exécution correcte de la signature numérique est inclus dans la demande de signature numérique (3),
dans lequel le fichier formaté a une extension prédéfinie associée à l'application de signature, et le procédé comprenant :
l'accès à une adresse Internet (2) du serveur à distance (9) par le biais du navigateur (6) par le signataire ;
la réception de la demande de signature numérique du serveur à distance (9) par le navigateur (6) ;
l'exécution automatique de l'application de signature (4) lors de la réception du fichier formaté dans l'appareil électronique (1) par détection de l'extension prédéfinie du fichier formaté, de sorte à détecter les paramètres du fichier formaté et à exécuter la signature numérique selon des paramètres détectés et par utilisation d'une clé cryptographique du signataire pour générer la signature numérique, ladite clé étant stockée dans le dispositif électronique (1) ou entrée dans le dispositif électronique (1) par le signataire ; et
la réalisation d'une action sur la base des paramètres, ladite action incluant l'envoi d'un message mail à une adresse prédéterminée définie dans les paramètres ou une action HTTP_POST.

2. Procédé selon la revendication 1, **caractérisé en ce que** lesdits paramètres comprennent au moins un parmi un algorithme cryptographique à utiliser dans l'application de signature (4), un nom d'un fichier à signer et son extension, un document à signer, une ou plusieurs informations alphanumériques pour l'exécution correcte de la signature numérique, lesdites informations comprenant de préférence des données de temps ou une action (7) à exécuter après la signature numérique pour l'émission d'un résultat de la signature numérique.

3. Procédé selon les revendications 1, **caractérisé en ce que** le résultat de la signature numérique est envoyé de l'application de signature (4) à un serveur de gestion de signature numérique (8) qui est situé à une adresse prédéterminée et est différent du serveur (9) qui fournit un service au moyen de l'adresse Internet (2).

4. Procédé selon la revendication 3, **caractérisé en ce que** ladite application de signature (4) émet en outre au serveur (9) une confirmation de signature (10) et un fichier signé.

5. Procédé selon l'une quelconque des revendications précédentes, **caractérisé en ce que** ledit fichier formaté comprend un fichier d'archive, de préférence un fichier .zip ou un fichier .JAR.

6. Procédé selon la revendication 5, **caractérisé en ce que** ledit fichier d'archivé comprend, dans un champ DATA, un fichier à signer, et, dans un champs MANIFEST, un fichier XML qui inclut lesdits paramètres pour une exécution correcte de la signature numérique.
